# EUROPÄISCHE PATENTANMELDUNG

(11) **EP 2 495 595 A2**
(43) Veröffentlichungstag der Anmeldung: **05.09.2012**
(21) Anmeldenummer: 12157360.4
(22) Anmeldetag: 28.02.2012
(51) Int. Cl.: G02B 13/16, G02B 27/00, G02B 6/06, G02B 17/08, G02B 7/02

(54) **Optische Aufnahmeeinrichtung**

(30) Priorität: 01.03.2011 DE 102011000989
(71) Anmelder: Jena-Optronik GmbH, 07745 Jena (DE)
(72) Erfinder: Kirschstein, Steffen, 07751 Zöllnitz (DE)
(74) Vertreter: Ege, Guido

(57) **Zusammenfassung**

Die Erfindung betrifft eine optische Aufnahmeeinrichtung (1) zur Erfassung und Verarbeitung von optischer Strahlung mit einem monolithisch ausgebildeten und mit einer homozentrischen Linsengruppe (5) ausgestatteten Objektiv (3), einer Sensoreinheit (4) mit einer planen Sensorfläche (16) und einem zwischen einer nicht planen Brennfläche (14) einer Endlinse des Objektivs (3) und der Sensorfläche (16) spaltfrei angeordneten Faserplatte (15). Um eine derartige Aufnahmeeinrichtung (1) mit geringeren Fertigungstoleranzen versehen zu können und insbesondere durch die Aufnahmeeinrichtung (1) selbst bedingtes Streulicht vermindern zu können, ist in dem Strahlengang (17) des Objektivs (3) zwischen zwei Linsen (8, 9) der homozentrischen Linsengruppe (5) ein Korrekturglied (18) eingebracht.

## Beschreibung

Die Erfindung betrifft eine optische Aufnahmeeinrichtung zur Erfassung und Verarbeitung von optischer Strahlung mit einem monolithisch ausgebildeten und mit einer homozentrischen Linsengruppe ausgestatteten Objektiv, einer Sensoreinheit mit einer planen Sensorfläche und einem zwischen einer nicht planen Oberfläche einer Endlinse des Objektivs und der Sensorfläche spaltfrei angeordneten Faserplatte.

Aus der DE 197 24 180 C2 ist eine optische Aufnahmeeinrichtung in einem optischen Lagesensor wie Sternsensor bekannt, die ein monolithisch ausgebildetes Objektiv mit einer homozentrischen Linsengruppe aufweist. Hierbei sind zwei eine Kugellinse bildende Linsen vorgesehen, die jeweils mittels einer planen Oberfläche aneinander gelegt sind. Durch das homozentrische Design des Objektivs kann mittels mehrerer aneinander angeordneter Linsen eine optisch anspruchsvolle Wirkung erzielt werden, wobei die hintereinander angeordneten Linsen sich im Wesentlichen wie eine einzige Linse, das heißt beispielsweise sich weniger beziehungsweise unempfindlich gegenüber Zentrierungsfehlern verhalten. Insbesondere werden chromatische Aberrationen weitgehend korrigiert. Das Design der homozentrischen Ausführung des Objektivs bedingt allerdings insbesondere bei kleinen Blendenzahlen, beispielsweise bei F-Zahlen kleiner gleich 1,5 vergleichsweise hohe Öffnungsfehler und ein vergleichsweise schlechtes Streulichtverhalten. Weiterhin treten fertigungsbedingt Defokussierfehler auf, die in dem beschriebenen Stand der Technik nicht korrigieren werden können. Um eine optimale Bildqualität, insbesondere eine Verringerung von Defokussierfehlern zu erzielen, müssen die Linsen der homozentrischen Linsengruppe mit sehr geringen Fertigungstoleranzen und/oder unter Hinnahme eines hohen Ausschusses hergestellt werden, wodurch die Fertigungskosten in die Höhe getrieben werden.

Aufgabe der Erfindung ist die Weiterbildung von optischen Aufnahmeeinrichtungen mit monolithisch ausgebildeten und mit einer homozentrischen Linsengruppe ausgestatteten Objektiv vor dem Hintergrund einer kostengünstigeren Fertigung und verbesserten optischen Eigenschaften.

Die Aufgabe wird durch eine Aufnahmeeinrichtung zur Erfassung und Verarbeitung von optischer Strahlung mit einem monolithisch ausgebildeten und mit einer homozentrischen Linsengruppe ausgestatteten Objektiv, einer Sensoreinheit mit einer planen Sensorfläche und einem zwischen einer nicht planen Oberfläche einer Endlinse des Objektivs und der Sensorfläche spaltfrei angeordneten Faserplatte gelöst, wobei in dem Strahlengang des Objektivs zwischen zwei Linsen der homozentrischen Linsengruppe ein Korrekturglied eingebracht ist. Durch das Korrekturglied kann die homozentrische Linsengruppe bereits während deren Auslegung und/oder nachträglich, das heißt nach der Fertigung der Linsen und in idealer Weise nach einer Feststellung eines zu korrigierenden Fehlers korrigiert werden. Unter Korrekturglied ist dabei eine Einrichtung zur Korrektur des Öffnungsfehlers, einer Defokussierung, die beispielsweise durch die Fertigung der Linsen der homozentrischen Linsengruppe bedingt ist und/oder während der Montage der Linsengruppe auftritt, und/oder eine Einrichtung zur Verbesserung des Streulichtverhaltens, insbesondere des innerhalb der Aufnahmeeinrichtung beispielsweise durch eine vor dem Objektiv angeordnete Streulichtblende selbst verursachtes Streulicht, zu verstehen. Dabei kann jeweils ein Korrekturglied zu Verbesserung der Defokussierung und des Streulichtverhaltens vorgesehen sein. Besonders vorteilhaft ist jedoch ein Korrekturglied, das zugleich die Defokussierung beseitigt oder zumindest verbessert und Streulicht eliminiert oder zumindest vermindert.

Gemäß einer vorteilhaften Ausführungsform ist das Korrekturglied in einem Symmetriezentrum des Objektivs angeordnet. Beispielsweise kann das Objektiv zwei das Symmetriezentrum beispielsweise als Kugellinse bildende, mit jeweils einer bevorzugt planen Oberfläche einander zugewandte Linsen enthalten, wobei das Korrekturglied zwischen diesen Linsen angeordnet ist. Im einfachsten Fall kann das Korrekturglied durch einen einstellbaren wie justierbaren Luftspalt gebildet werden, der abhängig von einem zu korrigierenden Brennpunkt beziehungsweise einer zu korrigierenden Brennfläche der Endlinse des Objektivs eingestellt wird. Alternativ kann zur Einstellung des Luftspalts ein Abstimmring, beispielsweise ein plastisch verformbares Element, beispielsweise in Form einer Folie eingebracht werden. Zusätzlich zu den eine vorliegende Defokussierung korrigierenden Eigenschaften kann der Abstimmring als Stoppblende eingesetzt werden, die über die Öffnung des Objektivs eintretende Strahlung begrenzt und das Streulichtverhalten verbessert, indem die Stoppblende in den Querschnitt der Linsen bezogen auf die optische Achse radial eingreift. Hierbei kann die Stoppblende einen kleineren Querschnitt als die vordere Öffnung des Objektivs aufweisen, so dass Streueffekte an der Öffnung durch die Blende ausgeblendet werden. Der einstellbare Luftspalt kann beispielsweise 0,1 bis 0,2 mm betragen. Zusätzlich kann ein Öffnungsfehler des Objektivs ausgeglichen werden, indem im Bereich des Luftspalts eine der beiden oder - beispielsweise bei aus Fertigungsgründen als Gleichteile ausgebildeten Linsen - beide die Kugellinsen bildende Linsen an ihren den Luftspalt bildenden Linsenoberflächen sphärisch mit gegenüber den dem Symmetriezentrum abgewandten Linsenoberflächen großem Radius, asphärisch oder diffraktiv ausgebildet sind.

Alternativ oder zusätzlich kann in dem Luftspalt eine Korrekturlinse angeordnet sein, die mittels einer vorgegebenen, einstellbaren Dicke von beispielsweise 1 mm bis 3 mm am Symmetriezentrum des Objektivs Defokussierfehler minimieren oder/und ausgleichen und mittels ihrer lichtbrechenden Eigenschaften Öffnungsfehler ausgleichen kann. Eine derartige Korrekturlinse kann in vorteilhafter Weise als Gradientenindexlinse, als sphärische oder asphärische Linse ausgebildet sein. Hierbei können deren Linsenoberflächen beispielsweise plan/konkav unter Verwendung von hochbrechenden Gläsern ausgebildet werden. Weiterhin können beispielsweise mittels Lasern (DOE) eingebrachte diffraktive Strukturen in der Korrekturlinse/-fläche vorgesehen sein. An der Korrekturlinse kann beispielsweise durch Beschichtung eine exakt ausgelegte Stoppblende angebracht sein, so dass Streuungen an den äußeren Umfängen der Eingangslinse und dergleichen im Symmetriezentrum eliminiert werden können.

Das Streulichtverhalten einer Aufnahmeeinrichtung kann weiterhin verbessert werden, indem das Objektiv bezüglich einer vollständig auszuleuchtenden Brennfläche auf der Faserplatte mit größerer Apertur ausgebildet und die Brennfläche mittels eines auf zumindest eine im Strahlengang angeordnete Oberfläche zumindest einer Linse aufgebrachten Blendenring reduziert ist. Die Blendenringe werden dabei auf entsprechende Linsen des Objektivs beispielsweise als lackierte, aufgedampfte, aufgesputterte oder in ähnlicher Weise aufgebrachte Schichten vorgesehen, die bezüglich ihrer Auftragsstärke so gering gehalten werden, dass der monolithische Charakter des Objektivs ohne Ausbildung großer Spalte aufrechterhalten bleibt. Das Material der Blendenringe ist dabei aus Licht absorbierenden Materialien beispielsweise mit einer Schichtdicke zwischen 5 und 15 Mikrometern als Lack (Acktar LTD, Fractal Black), geschwärzten Folien, oder als mittels anderer Verfahren wie Aufdampf- oder Sputterverfahren oder dergleichen aufgebrachte Schicht ausgebildet. Die Einschränkung der Querschnitte eines mit größeren Durchmessern als zur Ausbildung der Brennfläche an der Faserplatte ausgestatteten Objektivs und die Einbringung der vorgeschlagenen Blendenringe ermöglicht die Absorption von Streulicht mit höheren Einfallswinkeln als dem gewünschten, auf der Faserplatte und anschließend auf der Sensoreinheit abgebildeten Sehfeld.

In einem weiteren vorteilhaften Ausführungsbeispiel ist eine Aufnahmeeinrichtung vorgesehen, bei der das Objektiv katadioptrisch als Massivspiegelobjektiv mit zumindest zwei verspiegelten Ringaperturen ausgebildet ist. Der Korrektur von Öffnungsfehlern dient ein Korrekturglied, das in eine oder beide Ringaperturen integriert ist. Die Ringaperturen sind dabei verspiegelt ausgebildet, wobei Art der Ausbildung der Verspiegelung der Ringaperturen Öffnungsfehler ausgleicht. Hierzu kann die Verspiegelung asphärisch ausgebildet und auf den Öffnungsfehler abgestimmt sein. Die Ringaperturen sind dabei an den Linsenflächen der homozentrischen Linsengruppe ringförmig angeordnet, beispielsweise als Beschichtung aufgebracht. Nicht als Spiegel genutzte Linsenflächen sind vorteilhafterweise mittels einer lichtabsorbierenden Beschichtung zur Verbesserung des Streulichtverhaltens versehen, beispielsweise geschwärzt. Der äußere Spiegelring kann auf einem großen Durchmesser angeordnet werden, so dass die daraus resultierende große Spiegelfläche hohe Blendenzahlen bis zu 1,0 erlaubt. Ein vor die Aufnahmeeinrichtung geschalteter Streulichtfilter insbesondere gegen Sonneneinstrahlung (Baffle) kann hierbei torisch ausgebildet sein.

Die Aufnahmeeinrichtung eignet sich insbesondere als optischer Lagesensor, beispielsweise als Sternsensor in Raumflugkörpern wie Satelliten, Raumfähren und Raumstationen zu deren Lagebestimmung anhand von mittels der Aufnahmeeinrichtung in deren Sehfeld ermittelten Ausschnitten des Sternenhimmels. Diese werden mit in einem Datenspeicher hinterlegten Sternkarten verglichen. Aus den Vergleichen wird die Position des Raumflugkörpers berechnet und beispielsweise als Eulerwinkel oder Quaternionen an eine Steuerung des Raumflugkörpers ausgegeben

Die Erfindung wird anhand der in den Figuren 1 bis 4 dargestellten Ausführungsbeispiele näher erläutert. Dabei zeigen:
- Figur 1: einen Schnitt durch eine Aufnahmeeinrichtung mit in der homozentrischen Linsengruppe angeordnetem Korrekturglied in schematischer Darstellung,
- Figur 2: einen Schnitt durch eine gegenüber der Aufnahmeeinrichtung der Figur 1 mit geändertem Korrekturglied versehene Aufnahmeeinrichtung,
- Figur 3: einen Schnitt durch eine Aufnahmeeinrichtung mit radial in die monolithische Anordnung des Objektivs eingreifenden Blendenringen
- und Figur 4: ein gegenüber den Aufnahmeeinrichtungen der Figuren 1 bis 3 geändertes Ausführungsbeispiel einer Aufnahmeeinrichtung mit einem katadioptrisch ausgebildeten Objektiv mit in der homozentrischen Linsengruppe angeordneten Korrekturglied im Schnitt.

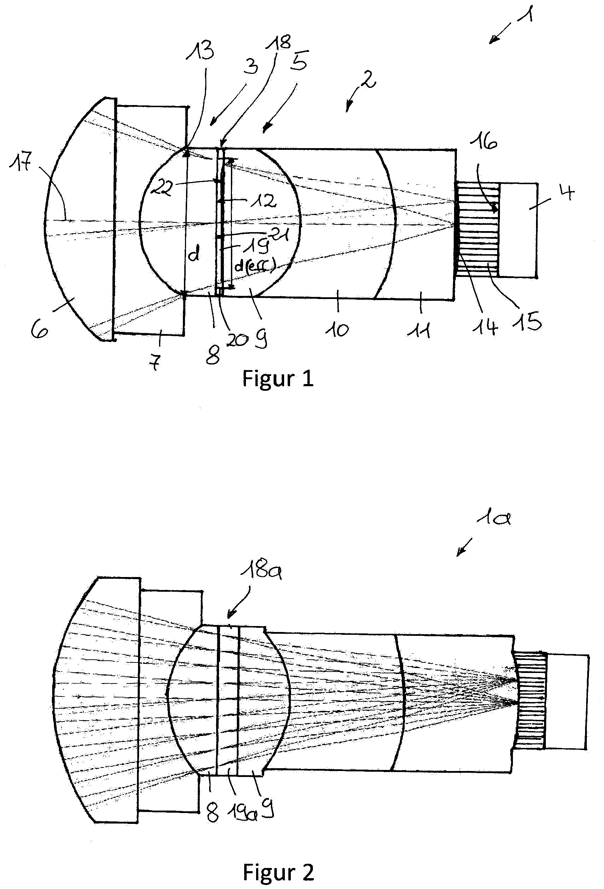

Figur 1 zeigt die optische Aufnahmeeinrichtung 1 in schematischer Darstellung im Schnitt mit der aus dem Objektiv 3 und der Sensoreinheit 4 gebildeten Optik 2. Dabei ist die das um Optik 2 angeordnete Gehäuse, das einen Streulichttubus (Baffle) beispielsweise gegen Streustrahlungen der Sonne enthalten kann, nicht dargestellt. Das Objektiv 3 weist ein monolithisches, homozentrisches Design mit der Linsengruppe 5 auf, die aus den Linsen 6, 7, 8, 9, 10, 11 gebildet und optisch quasi als eine einzige Linse mit dem sich zwischen den Linsen 8, 9 einstellenden optischen Symmetriezentrum 12 wirksam ist. Die Öffnung 13 der Optik 2 und damit dessen Sehfeld wird dabei durch den Durchmesser d der Linse 8 begrenzt. Die in dem Sehfeld erfasste optische Strahlung wie Licht wird entlang des Strahlengangs 17 über die Linsengruppe 5 geleitet und auf der Brennfläche 14 der als Endlinse konkav ausgebildeten Linse 11 abgebildet. Zur Wandlung des durch die als Frontlinse ausgebildeten Linse 6 erfassten und auf der Brennfläche 14 konkav abgebildeten Sehfelds schließt sich spaltlos die beispielsweise auf die Brennfläche 14 gekittete Faserplatte 15 an die Linse 11 an und ist auf deren anderen Seite spaltlos an die plane Sensorfläche 16 der Sensoreinheit 4, beispielsweise einem CCD-Chip angeschlossen wie gekittet.

Um das monolithische Design des Objektivs 3 beispielsweise bezüglich fertigungsbedingten Fehlern und Öffnungsfehlern korrigieren zu können, ist zwischen den Linsen 8, 9 also im Bereich des Symmetriezentrums 12 das Korrekturglied 18 vorgesehen, das in dem gezeigten Ausführungsbeispiel aus dem Luftspalt 19 gebildet ist. Der Luftspalt 19 wird beispielsweise zwischen 0,1 und 0,2 mm eingestellt um eine durch fertigungsbedingte Abweichungen der Linsengruppe 5 bedingte Defokussierung der Brennfläche 14 auszugleichen. Der Luftspalt 19 ist in dem gezeigten Ausführungsbeispiel durch den Ausgleichsring 20, der beispielsweise aus einer Folie bestehen kann, justiert. Weitere Ausführungsformen können eine Einstellung des Luftspalts 19 beispielsweise durch entsprechend festgelegte Positionierung im Gehäuse vorsehen. Im Weiteren können Streuungen der im Bereich des Durchmessers d der Öffnung 13 einfallenden Strahlung vermieden werden, indem der Ausgleichsring zugleich als Blendenring vorgesehen wird, der die Öffnung des Objektivs 3 auf einen definierten Durchmesser d(eff) begrenzt. Hierzu kann der Ausgleichsring mit absorbierendem Material beschichtet sein. Schließlich ermöglicht der Luftspalt 19 die Ausbildung zumindest einer der Linsenoberflächen 21, 22 der Linsen 8, 9 in sphärischer, asphärischer und/oder diffraktiver Form, um beispielsweise bei Blendenzahlen kleiner 1,5 die Öffnungsfehler zu verringern.

Figur 2 zeigt einen Schnitt durch die der Aufnahmeeinrichtung 1 der Figur 1 ähnliche Aufnahmeeinrichtung 1a in schematischer Darstellung. Im wesentlichen Unterschied zu dieser ist zwischen den Linsen 8, 9 das Korrekturglied 18a durch die Korrekturlinse 19a gebildet. Die bevorzugt zwischen 1 mm und 2mm in ihrer Stärke messende Korrekturlinse 19a kompensiert fertigungsbedingte Fokussierfehler und Öffnungsfehler insbesondere bei kleinen Blendenzahlen, so dass die Aufnahmeeinrichtung 1a für Blendenzahlen kleiner 1,5 für einen Lagesensor wie Sternsensor in ausreichend korrigierter Qualität vorgeschlagen werden kann, um beispielsweise einen Fehler des Sternsensors kleiner einer Bogensekunde vorsehen zu können. Die Korrekturlinse kompensiert Fehler dabei beispielsweise durch Ausführung als Gradientenindexlinse, als sphärische Linse aus hochbrechenden Gläsern mit konkav/planen Linsenoberflächen, als asphärische Linse aus hochbrechenden Gläsern mit konkav/planen Linsenoberflächen oder mittels diffraktiven Strukturen, beispielsweise diffraktiven optischen Elementen (DOE).

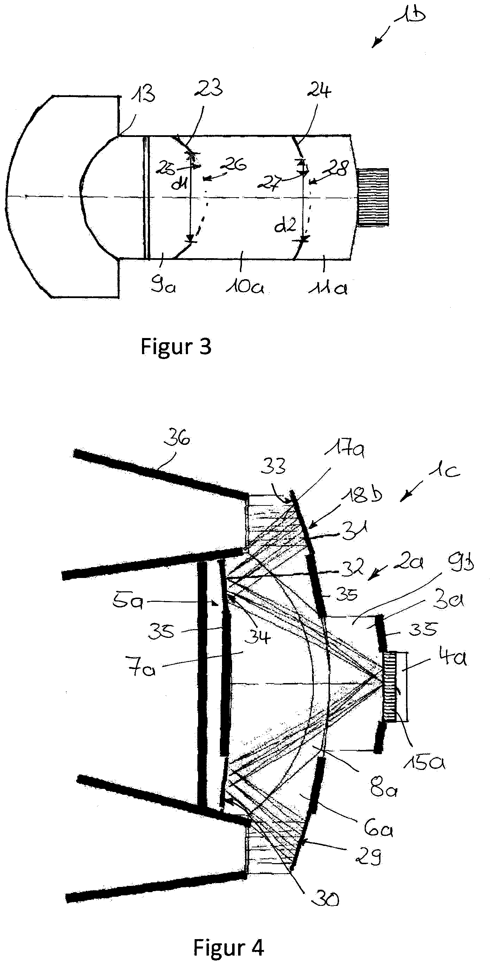

Figur 3 zeigt die gegenüber den Aufnahmeeinrichtungen 1, 1a der Figuren 1 und 2 erweiterte Aufnahmeeinrichtung 1 b, bei der zwischen zumindest zwei monolithisch angeordneten - hier der Übersicht halber an den gestrichelten Linien aneinander angelegten - Linsen 9a, 10a, 11a ein Blendenring 23, 24 angeordnet ist. In dem gezeigten Ausführungsbeispiel sind die Blendenringe 23, 24 zwischen den Linsen 9a, 10a und zwischen den Linsen 10a, 11a angeordnet. Der Durchmesser d1, d2 beschränkt die effektive Öffnung der Aufnahmeeinrichtung 1 b und vermeidet Streuungen, die beispielsweise innerhalb der Aufnahmeeinrichtung 1 b beispielsweise an Kanten des Streulichttubus, an der Öffnung 13 und dergleichen auftreten. Durch eine entsprechend weitere Auslegung der Öffnung 13 kann die mittels der Durchmesser d1, d2 vorgegebene effektive Öffnung auf Blendenzahlen kleiner 1,5 eingestellt werden, ohne dass systembedingte Streuungen sich wesentlich bemerkbar machen. Hierbei können die Durchmesser d1, d2 unterschiedliche Größen aufweisen.

Die Blendenringe 23, 24 sind bevorzugt in dünner Schichtdicke im Mikrometerbereich auf jeweils eine der Linsenoberflächen 25, 26, 27, 28 der Linsen 9a, 10a, 11a in Form von Lack, oder einer Beschichtung mittels Aufdampfungsverfahren oder dergleichen aufgebracht und aus optisch absorbierendem Material gebildet, um die monolithische Anordnung der Linsen 9a, 10a, 11a nicht oder lediglich in vernachlässigbarer Weise zu stören. Eine einfachere Aufbringung der Blendenringe 23, 24 bei Aufbringung der Blendenringe 23, 24 auf die konkaven Linsenoberflächen 26, 28, eine einfachere Handhabung durch Aufbringung beider Blendenringe 23, 24 auf die Linsenoberflächen 25, 28 einer einzigen Linse 10a erfolgt abhängig von der entsprechenden Auslegung der Aufnahmeeinrichtung 1.

Figur 4 zeigt die gegenüber den Aufnahmeeinrichtungen 1, 1a, 1 b der Figuren 1 bis 3 unterschiedliche, als katadioptrisch ausgelegte, monolithische und homozentrisch ausgebildete Aufnahmeeinrichtung 1c, deren Optik 2a ein als Massivspiegelobjektiv ausgebildetes Objektiv 3a und die über die Faserplatte 15a spaltlos in den Strahlengang 17a gekoppelte Sensoreinheit 4a aufweist. Die Linsengruppe 5a mit monolithischem, monozentrischem Design enthält die Linsen 6a, 7a, 8a, 9b, wobei direkt auf den Linsenoberflächen 29, 30 der Linsen 6a, 7a die Ringspiegel 31, 32 als Beschichtungen aufgebracht wie aufgedampft sind. Die Ringspiegel 31, 32 legen gleichzeitig als Ringaperturen 33, 34 die Öffnung des Objektivs 3a fest. Hierzu sind die Ringaperturen 33, 34 durch lichtdichte Beschichtungen 35 begrenzt, die gleichzeitig Lichteinstrahlungen in das Objektiv 3a auf anderen Wegen als der Öffnung begrenzen. Zumindest einer der Ringspiegel 31, 32 wirkt dabei zusätzlich als Korrekturglied 18b für das Objektiv 3a, wobei die Ausbildung der Spiegeloberfläche bezüglich ihrer Krümmung kompensierend für den Fehler ausgebildet wird. Beispielsweise kann hierzu die ursprünglich plane, sphärische oder asphärische Form eines oder beider Ringspiegel 31, 32 geändert werden.

Die Aufnahmeeinrichtung 1 c baut durch die monolithische Massivspiegelanordnung sehr flach und kann infolge der Anordnung mit einer Ringapertur 33 großen Durchmessers ausgebildet werden, die Blendenzahlen von bis zu 1 ermöglichen. Um die Wirkung von Streustrahlung insbesondere der Sonne bei einem Einsatz als Sternsensor weiter zu vermindern kann der Streulichttubus 36 im Gegensatz zu üblichen trichterförmigen Ausbildungen torusförmig ausgebildet werden.

### Bezugszeichenliste

- 1: Aufnahmeeinrichtung
- 1a: Aufnahmeeinrichtung
- 1b: Aufnahmeeinrichtung
- 1c: Aufnahmeeinrichtung
- 2: Optik
- 2a: Optik
- 3: Objektiv
- 3a: Objektiv
- 4: Sensoreinheit
- 4a: Sensoreinheit
- 5: Linsengruppe
- 5a: Linsengruppe
- 6: Linse
- 6a: Linse
- 7: Linse
- 7a: Linse
- 8: Linse
- 8a: Linse
- 9: Linse
- 9a: Linse
- 9b: Linse
- 10: Linse
- 10a: Linse
- 11: Linse
- 11a: Linse
- 12: Symmetriezentrum
- 13: Öffnung
- 14: Brennfläche
- 15: Faserplatte
- 15a: Faserplatte
- 16: Sensorfläche
- 17: Strahlengang
- 17a: Strahlengang
- 18: Korrekturglied
- 18a: Korrekturglied
- 18b: Korrekturglied
- 19: Luftspalt
- 19a: Korrekturlinse
- 20: Ausgleichsring
- 21: Linsenoberfläche
- 22: Linsenoberfläche
- 23: Blendenring
- 24: Blendenring
- 25: Linsenoberfläche
- 26: Linsenoberfläche
- 27: Linsenoberfläche
- 28: Linsenoberfläche
- 29: Linsenoberfläche
- 30: Linsenoberfläche
- 31: Ringspiegel
- 32: Ringspiegel
- 33: Ringapertur
- 34: Ringapertur
- 35: Beschichtung
- 36: Streulichttubus
- d: Durchmesser
- d(eff): Durchmesser
- d1: Durchmesser
- d2: Durchmesser

## Patentansprüche

1. Aufnahmeeinrichtung (1, 1a, 1 b, 1c) zur Erfassung und Verarbeitung von optischer Strahlung mit einem monolithisch ausgebildeten und mit einer homozentrischen Linsengruppe (5, 5a) ausgestatteten Objektiv (3, 3a), einer Sensoreinheit (4, 4a) mit einer planen Sensorfläche (16) und einem zwischen einer nicht planen Brennfläche (14) einer Endlinse des Objektivs (3, 3a) und der Sensorfläche (16) spaltfrei angeordneten Faserplatte (15, 15a), **dadurch gekennzeichnet, dass** in dem Strahlengang (17, 17a) des Objektivs (3, 3a) zwischen zwei Linsen (8, 9; 6a, 7a) der homozentrischen Linsengruppe (5, 5a) ein Korrekturglied (18, 18a, 18b) eingebracht ist.

2. Aufnahmeeinrichtung (1, 1a, 1 b, 1c) nach Anspruch 1, **dadurch gekennzeichnet, dass** das Korrekturglied (18, 18a, 18b) in einem Symmetriezentrum (12) des Objektivs (3, 3a) angeordnet ist.

3. Aufnahmeeinrichtung (1, 1a, 1b) nach Anspruch 1 oder 2, **dadurch gekennzeichnet, dass** das Objektiv (3) zwei das Symmetriezentrum (12) bildende, mit jeweils einer Linsenoberfläche (21, 22) einander zugewandte Linsen (8, 9) aufweist, wobei das Korrekturglied (18, 18a) zwischen diesen Linsen (8, 9) angeordnet ist.

4. Aufnahmeeinrichtung (1, 1b) nach Anspruch 3, **dadurch gekennzeichnet, dass** das Korrekturglied (18, 18a) ein justierbarer Luftspalt (19) ist.

5. Aufnahmeeinrichtung (1a, 1 b) nach Anspruch 3 oder 4, **dadurch gekennzeichnet, dass** das Korrekturglied (18, 18a) ein Ausgleichsring (20) oder eine Korrekturlinse (19a) ist.

6. Aufnahmeeinrichtung (1 b) nach einem der Ansprüche 1 bis 5, **dadurch gekennzeichnet, dass** das Objektiv (3) bezüglich einer vollständig auszuleuchtenden Brennfläche (14) auf der Faserplatte (15) mit größerer Apertur ausgebildet und die Brennfläche (14) mittels eines auf zumindest eine im Strahlengang (17) angeordnete Linsenoberfläche (25, 26, 27, 28) zumindest einer Linse (9a, 10a, 11a) aufgebrachten Blendenrings (23, 24) reduziert ist.

7. Aufnahmeeinrichtung (1c) nach Anspruch 1 oder 2, **dadurch gekennzeichnet, dass** das Objektiv (3a) katadioptrisch mit zumindest zwei verspiegelten Ringaperturen (33, 34) ausgebildet und das Korrekturglied (18b) in eine der Ringaperturen (33, 34) integriert ist.

8. Aufnahmeeinrichtung (1c) nach Anspruch 7, **dadurch gekennzeichnet, dass** die verspiegelten Ringaperturen (33, 34) mittels einer Beschichtung auf Linsen (6a, 7a) der homozentrischen Linsengruppe (5a) ausgebildet sind.

9. Aufnahmeeinrichtung (1, 1a, 1 b, 1c) nach einem der Ansprüche 1 bis 8, **dadurch gekennzeichnet, dass** das Korrekturglied (18, 18a, 18b) eine Einrichtung zur Korrektur einer Defokussierung des Objektivs (3, 3a) ist.

10. Aufnahmeeinrichtung (1, 1a, 1 b, 1c) nach einem der Ansprüche 1 bis 9, **dadurch gekennzeichnet, dass** das Korrekturglied (18, 18a, 18b) eine Einrichtung zur Begrenzung von Streulicht ist.
